# EUROPEAN PATENT SPECIFICATION

(11) **EP 1 825 663 B1**
(45) Date of publication and mention of the grant of the patent: **14.10.2020**
(21) Application number: 05851574.3
(22) Date of filing: 14.11.2005
(51) Int. Cl.: H04M 15/28, H04M 15/00, H04L 12/14, H04W 4/24

(54) **METHOD, APPARATUS AND COMPUTER PROGRAM FOR PROVIDING SERVICES AND SERVICES USAGE INFORMATION FOR A WIRELESS SUBSCRIBER UNIT**
VERFAHREN, VORRICHTUNG UND COMPUTERPROGRAMM ZUM BEREITSTELLEN VON DIENSTEN UND INFORMATIONEN ÜBER DIE VERWENDUNG VON DIENSTEN FÜR EINE DRAHTLOSE TEILNEHMEREINHEIT
PROCEDE, APPAREIL ET PROGRAMME INFORMATIQUE POUR LA FOURNITURE DE SERVICES ET INFORMATION D'UTILISATION DE SERVICES POUR UNE UNITE SANS FIL D'ABONNE

(30) Priority: 07.12.2004 US 5835
(43) Date of publication of application: 29.08.2007
(73) Proprietor: Google Technology Holdings LLC, Mountain View, CA 94043 (US)
(72) Inventor: TSEITLIN, Eugene, R., Northbrook, Illinois 60062 (US); ALONSO, Leopold, A., Barrington, Illinois 60010 (US); KOGAN, Barry, M., Arlington Heights, Illinois 60004 (US)
(74) Representative: Hewett, Jonathan Michael Richard
(86) International application number: PCT/US2005/041033
(87) International publication number: WO 2006/062682

(56) References cited:
- WO-A2-2006/022776
- WO-A2-2007/047032
- GB-A- 2 336 070
- US-A- 5 706 330
- US-A1- 2003 144 003

## Description

### BACKGROUND OF THE INVENTION

### Field of the Invention

The present invention generally relates to the field of wireless communications, and more particularly relates to the creation and management of billing information for a multi-service wireless subscriber unit.

### Background of the Invention

Wireless subscriber units continue to expand in function and features as wireless technology develops. Multiple services can now be performed on a single wireless subscriber unit. Examples of multiple services include telephone service, dispatch service, and packet data service. Further, these wireless services can include communications between wireless subscribe devices using a central call processing switch and services enabling point-to-point communications between wireless devices without going through a call processing switch. An advantage to a multi-service wireless device is the ability to communicate with a number of different types of devices using various wireless services e.g. cellular, satellite, point-to-point and others. The availability of multi-service wireless services is not without it challenges. One challenge is to correctly bill for of each service.

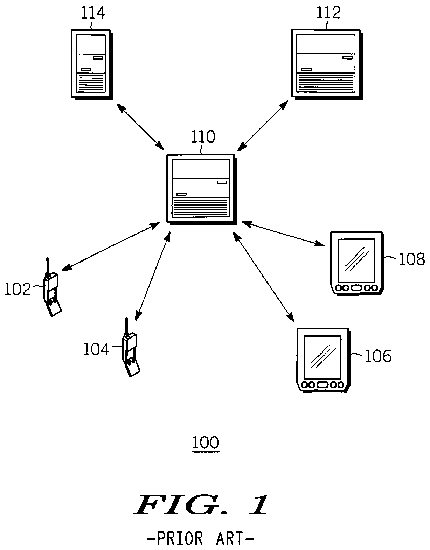

For example, FIG. 1 illustrates a current system 100 with a centralized call processing server 110 that is used for allowing wireless subscriber units 102, 104, 106, 108 to communicate with each other. The wireless subscriber units 102, 104, 106, 108 communicate with each other by setting up the connection through the call processing server 110. The call processing server 110 then communicates with the location server 112 to locate the party to the connection. A billing server 114 communicates with the call processing server 110 and records all billing information for the wireless subscriber units 102, 104, 106, 108. This system 100 enables traditional billing methods for wireless data, such as voice calls or instant messaging, in services where the wireless subscriber units using a wireless network and for services in which the wireless network is only used for call setup to enable point-to-point, such as IP (Internet Protocol) based calls between wireless subscriber units.

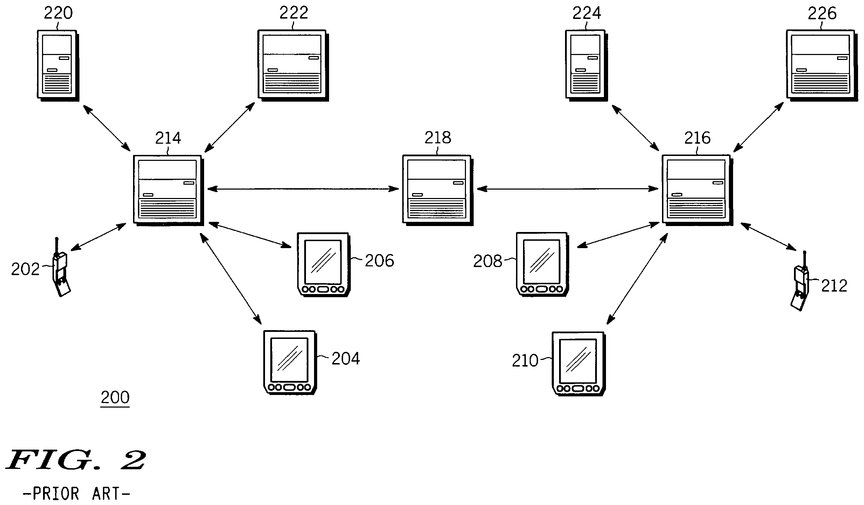

FIG. 2 illustrates another system 200 with a first centralized call processing server 214 that is currently used for allowing wireless subscriber units 202, 204, 206, 208, 210, 212 to communicate with and locate a peer wireless subscriber unit communicatively coupled to a second centralized call processing server 216.. The wireless subscriber units 202, 204, 206 must register with the call processing server 214. Similarly, the wireless subscriber units 208, 210, 212 must register with the call processing server 216. In the case where a wireless subscriber unit 202, 204, 206, 208, 210, 212 wirelessly communicates with another unit registered with the same call processing server 214, 216, the system performs as described in FIG. 1. However, in the case where the wireless subscriber unit 202, 204, 206, 208, 210, 212 wirelessly communicates with a peer unit registered on a different call processing server 214, 216, the call processing server 214, 216 must communicate with a proxy server 218. The proxy server 218 communicates with the other call processing server 214, 216 and locates the peer unit.

Setting up a connection through a call processing server is inefficient because traffic flow problems are created. A call processing servers has a limited capacity for the amount of traffic that the server can process. The lack of resources in the call processing server creates a bottleneck effect which hinders network performance. Additionally, when the connection is setup through a call processing server, security becomes an issue because the wireless subscriber units are not communicating directly with each other. The call processing server needs to take additional steps, for example, encryption, to ensure a secure connection between the wireless subscriber units. The additional steps further reduce the resources available on the call processing server and add to the bottleneck effect.

As discussed above, the wireless subscriber units are multi-service capable and one of those services is direct peer-to-peer communication. In the case where the service is a direct point-to-point communication between two or more wireless subscriber units, billing for such service is very difficult to provide. It is not uncommon for the call setup to go through multiple servers and often times multiple entities when providing direct peer-to-peer communication. This complexity makes billing security from one wireless subscriber unit to another wireless subscriber unit difficult.

Another problem in the case of direct peer-to-peer communication between wireless subscriber units is that a centralized server is not always involved in the connection setup in the case when a user of a wireless unit previously obtained a direct address of another wireless subscriber unit. In this case, the wireless subscriber units communicate with each other directly with the initial call connection setup by a call processing server. Therefore, billing the units for time usage is very difficult. The units are usually billed by the number of bits transmitted or just a flat rate fee. When billing by the amount of bits transmitted, unstable coverage and slow transmission speeds triggers data re-transmission in which the billing system usually cannot properly identify or a complicated billing system has to be used. Unnecessary service charges occur as a result and the system does not have the capability to dynamically manipulate these extra charges. Also in the case where wireless subscriber units communicate directly with each other and without use of a call processing server, billing by a flat rate is not efficient. The user of the wireless subscriber unit many times cannot estimate the cost of the service or choose the optimal cost for the service. For example, the user cannot select a slower service for a lower fee.

Yet another problem with the prior art is that there may be a separate billing system for each service that the wireless subscriber unit is capable of performing and/or each method of communicating i.e. direct point-to-point or through a wireless network. For example, there may be a different billing system for telephone service, dispatch service, and packet data service. These systems are not integrated so that a wireless subscriber unit using all of the services separately or simultaneously can be properly billed for the services.

Therefore a need exists to overcome the problems with the prior art as discussed above.

WO 2006/022776 A2 discloses a SIM card for a phone having a first memory partition on which a phone user identity and phone network access data are stored. A service usage monitoring application is stored in a memory. The service usage monitoring application (a) logs information about a service used via the phone, (b) creates a service usage record for the service activity based on the information, (c) stores the service usage record in a buffer, (d) creates a reporting message containing at least one service usage data record, (e) sends the reporting message to a remote server at a preset interval based on a triggered event, and (f) purges the at least one service usage record from the buffer upon successful transmission of the reporting message.

US 5 706 330 A discloses a communications accounting system is provided wherein the transfer of call detail record information from a remotely located phone may be accomplished in an efficient manner. During non-billable processes or during airtime billed at a reduced rate, the call detail record (CDR) information from the previous registration is simultaneously sent to the collector system for processing to the billing system.

### SUMMARY OF THE INVENTION

The present invention is defined by the appended independent claims. Dependent claims constitute embodiments of the invention. Any other embodiment of the description not covered by the appended claims is to be considered as examples for understanding the present invention.

An advantage of the foregoing embodiments of the present invention is that a wireless subscriber unit registers with a communications system and directly connects to another wireless subscriber unit. The service usage details are recorded locally on the wireless device. This results in increased end-to-end security for the wireless subscriber units and provides a more efficient and accurate billing system for a wireless subscriber unit.

### BRIEF DESCRIPTION OF THE DRAWINGS

The accompanying figures, where like reference numerals refer to identical or functionally similar elements throughout the separate views and which together with the detailed description below are incorporated in and form part of the specification, serve to further illustrate various embodiments and to explain various principles and advantages all in accordance with the present invention.
FIG. 1 illustrates a prior art system for a communications system in which wireless subscriber units communicate via a call processing server.
FIG. 2 illustrates a prior art system for a communications system in which wireless subscriber units locate a peer wireless subscriber unit via a proxy server.
FIG. 3 is a block diagram illustrating a wireless communications system, according to an embodiment of the present invention.
FIG. 4 illustrates an exemplary wireless subscriber unit for a wireless communications system according to an embodiment of the present invention, according to an embodiment of the present invention.
FIG. 5 illustrates an exemplary functional sequence for the overall process of the present invention, according to an embodiment of the present invention.
FIG. 6 illustrates an exemplary functional sequence further describing the sequence of FIG. 5 for registering a wireless subscriber unit with a communications network system, according to an example of the present invention.
FIG. 7 illustrates an exemplary functional sequence further describing the sequence of FIG. 5 for establishing service with another wireless subscriber unit, according to an embodiment of the present invention.
FIG. 8 illustrates an exemplary functional sequence further describing the sequence of FIG. 5 for completing a service with another wireless subscriber unit, according to an embodiment of the present invention.
FIG. 9 illustrates an exemplary functional sequence for the overall process of the present invention from the viewpoint of the communications system, according to an example of the present invention.
FIG. 10 illustrates an exemplary service status table according to an embodiment of the present invention.

### DETAILED DESCRIPTION OF THE EMBODIMENT

### Overview

As required, detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually any appropriately detailed structure. Further, the terms and phrases used herein are not intended to be limiting; but rather, to provide an understandable description of the invention.

The terms "a" or "an", as used herein, are defined as one or more than one. The term plurality, as used herein, is defined as two or more than two. The term another, as used herein, is defined as at least a second or more. The terms including and/or having, as used herein, are defined as comprising (i.e., open language). The term coupled, as used herein, is defined as connected, although not necessarily directly, and not necessarily mechanically. The terms program, software application, and the like as used herein, are defined as a sequence of instructions designed for execution on a computer system. A program, computer program, or software application may include a subroutine, a function, a procedure, an object method, an object implementation, an executable application, an applet, a servlet, a source code, an object code, a shared library/dynamic load library and/or other sequence of instructions designed for execution on a computer system.

The present invention, according to an embodiment, overcomes problems with the prior art by providing end-to-end security and the capability of efficiently and accurately billing the wireless subscriber unit for multi-service usage.

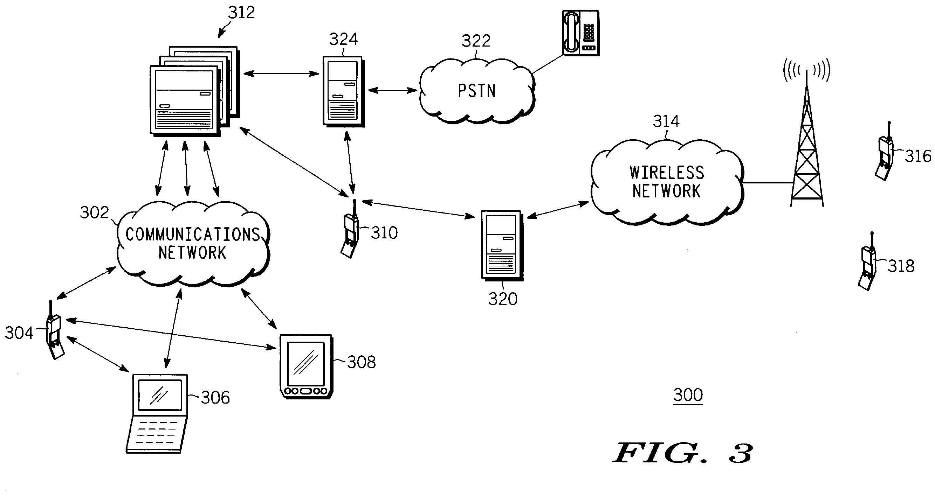

According to an embodiment of the present invention, as shown in FIG. 3, an exemplary wireless communications system 300 is illustrated. FIG. 3 shows a communications network 302 that connects wireless subscriber units 304, 306, 308, 310 with a communications system 312. The communications network 302 supports any number of wireless subscriber units 304,306, 308, 310, which include support for any wireless device capable of point-to-point communications such as Internet Protocol ("IP") based communications and other direct addressable protocols.. Other types of mobile wireless communications standards are also within the true scope and spirit of the communications network 302 which are described below. For example, mobile telephones, smart phones, text messaging devices, handheld computers, pagers, beepers, or the like can be supported by the communications network 302. A smart phone is a combination of 1.) a pocket PC, handheld PC, palm top PC, or Personal Digital Assistant (PDA) and 2.) a mobile telephone. More generally, a smart phone is a mobile telephone that has additional application processing capabilities.

### Wireless Communication System

The wireless subscriber units 304, 306, 308, 310 are capable of performing multiple services. For example, the wireless subscriber unit can perform peer-to-peer communication, telephone service communication, packet data communication, or the like.

The wireless communications system 300 also includes a wireless network 314. The wireless network 314 includes a mobile phone network, a mobile text messaging device network, a pager network, or the like. Further, the communications standard of the wireless network 314 comprises Code Division Multiple Access (CDMA), Time Division Multiple Access (TDMA), Global System for Mobile Communications (GSM), General Packet Radio Service (GPRS), Frequency Division Multiple Access (FDMA), Integrated Enhanced Digital Network (iDEN), or the like.

The wireless subscriber units 304, 306, 308, 310 communicate with other wireless subscriber units 316, 318 that are operating in the wireless network 314 through a proxy server 320. The proxy server 320 is communicatively coupled to the wireless subscriber units 304,306, 308, 310 and the wireless network 314. The proxy server 320 provides an interface for the wireless subscriber units 304, 306, 308, 310 to the various communications standards of the wireless network 314. Additionally, in another example, the wireless subscriber units 304, 306, 308, 310 connects to a public switched telephone network ("PSTN") 322 through a proxy server 324, which is communicatively coupled to the communications system 312 and the PSTN 322 .

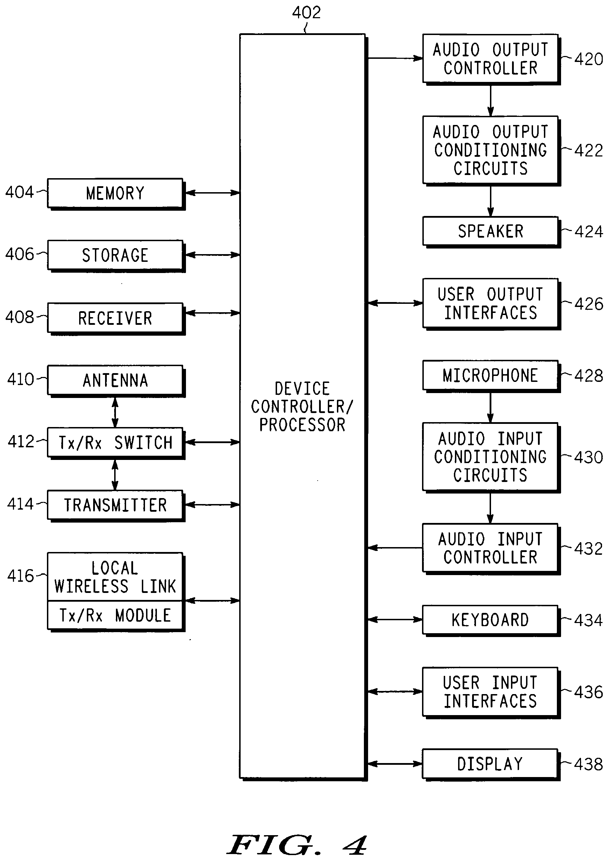

FIG. 4 illustrates an exemplary wireless subscriber unit 304 for a wireless communications system 300. In one example of the present invention, the wireless subscriber unit 304 is a two-way radio capable of receiving and transmitting radio frequency signals over a communication channel under a communications protocol such as CDMA, FDMA, CDMA, GPRS, GSM or the like.

The wireless subscriber unit 304 operates under the control of a device controller/processor 402, which switches the wireless subscriber unit 304 between receive and transmit modes. In receive mode, the device controller 402 electrically couples an antenna 410 through a transmit/receive switch 412 to a receiver 408. The receiver 408 decodes the received signals and provides those decoded signals to the device controller 402. In transmit mode, the device controller 402 electrically couples the antenna 410, through the transmit/receive switch 412, to a transmitter 414. The device controller 402 operates the transmitter and receiver according to instructions stored in the memory 404. These instructions include a neighbor cell measurement-scheduling algorithm.

FIG. 4 also includes a non-volatile storage module 406 for storing information that may be used during the overall process of the present invention. For example, a received service data packet (not shown) waiting to be processed by the device controller 402 or a service status table 1002 (not shown) can be stored in the storage module 406.

The wireless subscriber unit 304 also includes a local wireless link 416 that allows the wireless subscriber unit 304, through a local wireless link transmit/receive module 418, to directly communicate with another wireless subscriber unit 306, 308, 310 without using the wireless network 314. The local wireless link 416, for example, is provided by Integrated Enhanced Digital Network (iDEN), Bluetooth, Infrared Data Access (IrDA) technologies or the like.

The wireless subscriber unit 304 further includes an audio output controller 420 that receives decoded audio output signals from the receiver 408 or the local wireless link transmit/receive module 418. The audio controller 420 sends the received decoded audio signals to the audio output conditioning circuits 422 that perform various conditioning functions. For example, the audio output conditioning circuits may reduce noise or amplify the signal. A speaker 424 receives the conditioned audio signals and allows audio output for listening by a user. The wireless subscriber unit 304 further includes additional user output interfaces 426, for example, a head phone jack (not shown) or a hands-free speaker (not shown).

The wireless subscriber unit 304 also includes a microphone 428 for allowing a user to input audio signals into the wireless subscriber unit 304. Sound waves are received by the microphone 428 and are converted into an electrical audio signal. Audio input conditioning circuits 430 receive the audio signal and perform various conditioning functions on the audio signal, for example, noise reduction. An audio input controller 432 receives the conditioned audio signal and sends the signal to the device controller 402.

The wireless subscriber unit 304 also comprises a keyboard 434 for allowing a user to enter information into the wireless subscriber unit 304. In another example, the wireless subscriber unit 304 further comprises additional user input interfaces 436 for example, touch screen technology (not shown), a joystick (not shown), or a scroll wheel (not shown). A display 438, for example, is also included on the wireless subscriber unit 304 for displaying information to the user of the wireless subscriber unit 304.

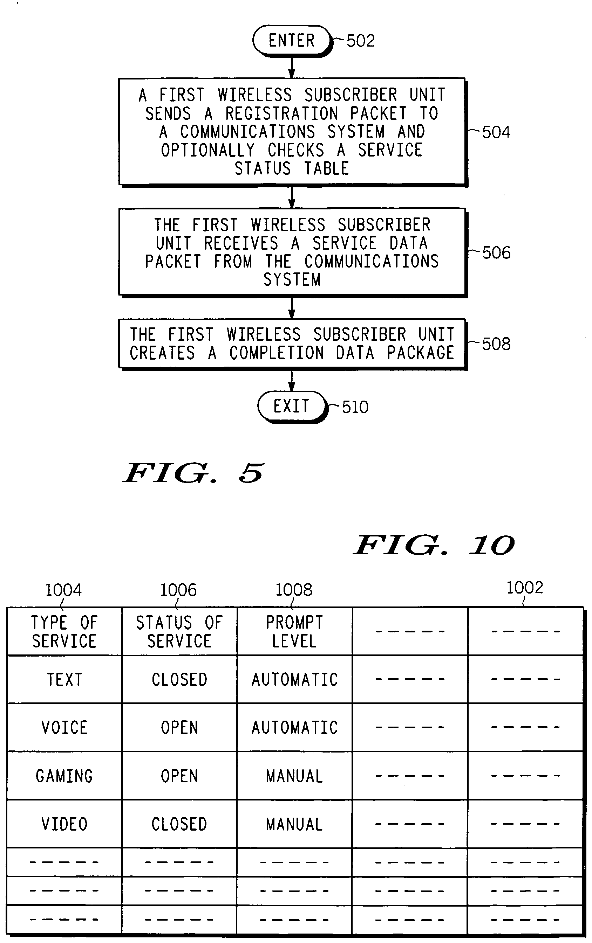

FIG. 5 illustrates an exemplary functional sequence for the overall process of the present invention. The exemplary functional sequence of FIG. 5 shows an overall process of how a first wireless subscriber unit 304 locally captures and provides billing services information for at least one service that was used during a connection with a second wireless subscriber unit 306. The exemplary functional sequence of FIG. 5 begins at step 502 and flows directly to step 504.

A first wireless subscriber unit 304 communicates with a communications system 312, for example, by using a secured protocol with two-way authentication such as the Secured Sockets Layer ("SSL"), Transport Layer Security ("TLS"), or the like. In one example, the communications system 312 includes an internet presence server ("IPS"). The IPS authenticates the first wireless subscriber unit 304 and provides a directory service that identifies the wireless subscriber units 306, 308, 310 that are presently available for communication. Additionally, the IPS also provides the first wireless subscriber unit with a service registration packet, as will be discussed in greater detail below. The IPS may further include a billing system for receiving a completion data packet from each wireless subscriber unit involved in a connection.

The first wireless subscriber unit 304, at step 504, then sends a registration request to the communications system 312. For example, the first wireless subscriber unit 304 may transmit a registration data packet to the communications system 312 for authorizing a use of at least one service with the first wireless subscriber unit 304. A service, as discussed above, can be peer-to-peer communication, telephone service communication, packet data communication, or the like. The registration packet transmitted by the first wireless subscriber unit 304 includes data that identifies the first wireless subscriber unit 304 to the communications system 312. The registration packet may also include, for example, provisioning information for the first wireless subscriber unit 304. Additionally, in one example, the first wireless subscriber unit 304, at step 504, checks a service status table 1002 to ensure that the status of a prior used service (if any) is closed. A prior service is closed, for example when the service is completed. The service status table 1002 will be discussed in greater detail below.

The communications system 312 then transmits a service data packet, which is then received by the first wireless subscriber unit 304, at step 506. The service data packet, according to one embodiment of the present invention, pre-defines which services the first wireless subscriber unit 304 can perform based on the data included in the registration data packet. In an alternative embodiment of the present invention, the content or information structure of the service data packet may be integrated into the hardware of the first wireless subscriber unit 304 for integrity and security purposes. The service data packet enables the first wireless subscriber unit 304 to establish a single connection with another wireless subscriber unit. Limiting a wireless subscriber unit to one connection per service data packet is accomplished, for example, by including an optional expiration mechanism within the transmitted service data packet.

The optional expiration mechanism may be configured to expire after a pre-defined interval of time has passed or after a connection with another wireless subscriber unit is completed, including a connection interruption. The use of an optional expiration mechanism ensures that a wireless subscriber unit and the communications system 312 stay in-synch by communicating at pre-defined intervals.

In an alternative example, the expiration mechanism can be configured to detect errors in a connection so that a premature expiration is avoided. For example, the expiration mechanism can be configured so that an expiration of the service data packet is avoided when a connection is dropped because of a weak signal, interference, or the like.

In addition to the expiration mechanism, the wireless subscriber unit and the communications system 312 may stay in-synch by configuring the wireless subscriber unit to automatically transmit re-synching data to the communications system 312 at predefined intervals. Alternatively, the communications system 312 may send a re-synch request to the wireless subscriber unit that would prompt the user to re-synch with the communications system 312. The wireless subscriber unit may also include a timing mechanism that would prompt the user to send or automatically send re-synching information to the communications system 312.

The service data packet, according to one example of the present invention can be characterized as an active token. After transmitting the registration packet, at step 504, the communications system 312 transmits the active token to the first wireless subscriber unit 304. The communications system allows the first wireless subscriber unit 304 to make at least one connection with one or more wireless subscriber units per active token. A connection according to one embodiment of the present invention may be defined as using a single service with one or more wireless subscriber units or using multiple services in parallel with one or more subscriber units.

After receiving the service data packet, at step 506, the first wireless subscriber unit 304 connects with another wireless subscriber unit, for example, a second wireless subscriber unit 306. The first wireless subscriber unit 304 then performs at least one of the services that were pre-defined by the service data packet. Once the first wireless subscriber unit 304 has completed the connection with the second wireless subscriber unit 306, the first wireless subscriber unit 304, at step 508, creates a completion data packet. An exemplary completion data packet includes information regarding each service or combination of services that the first wireless subscriber unit 304 performed during the connection with the second wireless subscriber unit 306. The completion data packet will be discussed in greater detail below. The functional sequence, at step 510, then exits.

One advantage of the embodiments of the present invention is that an infrastructure for a large number of wireless subscriber units that use a combination of services is provided. Centralized control of the wireless subscriber units is also provided by way of the communications system 312.

Another advantage of the embodiments of the present invention is that the problem of billing wireless subscriber units that communicate directly with each other while using multiple services is solved. The wireless subscriber units record their own service usage information thereby allowing more accurate and efficient billing by the wireless service provider.

Yet another advantage of the embodiments of the present invention is that security between the wireless subscriber units is increased. The wireless subscriber units initiate a direct connection with each other and notify a centralized system about the initiated connection. The centralized system verifies the connection thereby ensuring a secure connection.

### Details of Step 504

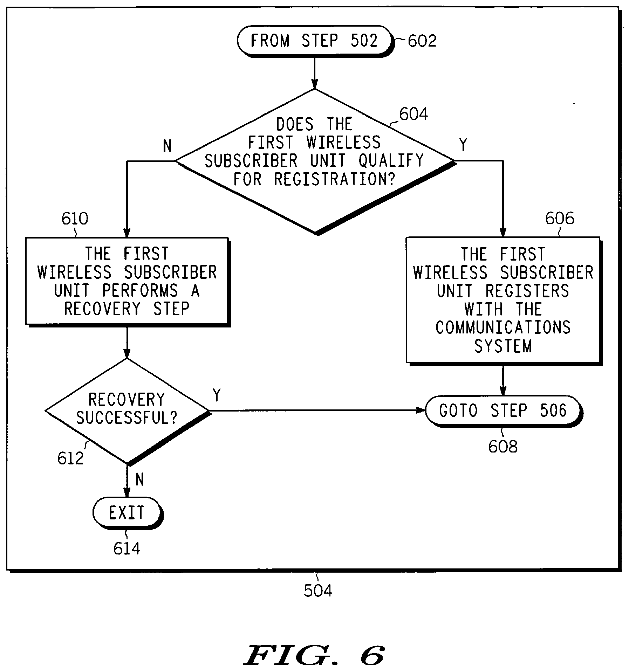

FIG. 6 is an exemplary functional sequence further describing the sequence of step 504, as described by FIG. 5. The functional sequence of FIG. 6 illustrates a more detailed sequence of how the first wireless subscriber unit 304 registers with the communications system 312. As with FIG. 5, in the functional sequence of FIG. 6 begins with step 502 and flows directly to step 604. The communications system 304 receives the registration data packet that was transmitted by the first wireless subscriber unit 304 at step 504. In one example, if the first wireless subscriber unit 304 has performed a service during a previous connection, the first wireless subscriber unit 304 checks the service status table 1002 to ensure the status of the service is closed.

The communications system 312, at step 604, determines whether the first wireless subscriber unit 304 qualifies for registration. If the result of this determination is positive, then control flows to step 606. In step 606, the first wireless subscriber unit 304 proceeds to create and send a service data packet, which is in step 506 of FIG. 5.

In the case in FIG. 6 where the first wireless subscriber unit does not qualify for registration, a recovery step 610 is performed at the communication server 312. If the first subscribe unit 304 cannot establishes a link with the server 312 then server 312 closes the connection and exits in step 614. If the recovery step 612 is successful and communication between the first wireless subscriber unit 304 and server 312 is established, the method continues to step 506. In another example, if the first wireless subscriber unit 304 establishes a connection but the server 312 is unsuccessful in identifying the first wireless subscriber 304, then the server 312 subsequently closes the connection and exits in step 614. As a result of the server 304 designates in a local table that the first wireless subscriber unit 304 is "disabled" and cannot communicate over the system. Moreover, to mitigate the occurrence of fraud, after a predetermined number of unsuccessful registration attempts, the first wireless subscriber unit 304 will not be able to register with the server 312 and the server 312 will report these multiple unsuccessful registration attempts to the administrator.

### Details of Step 506

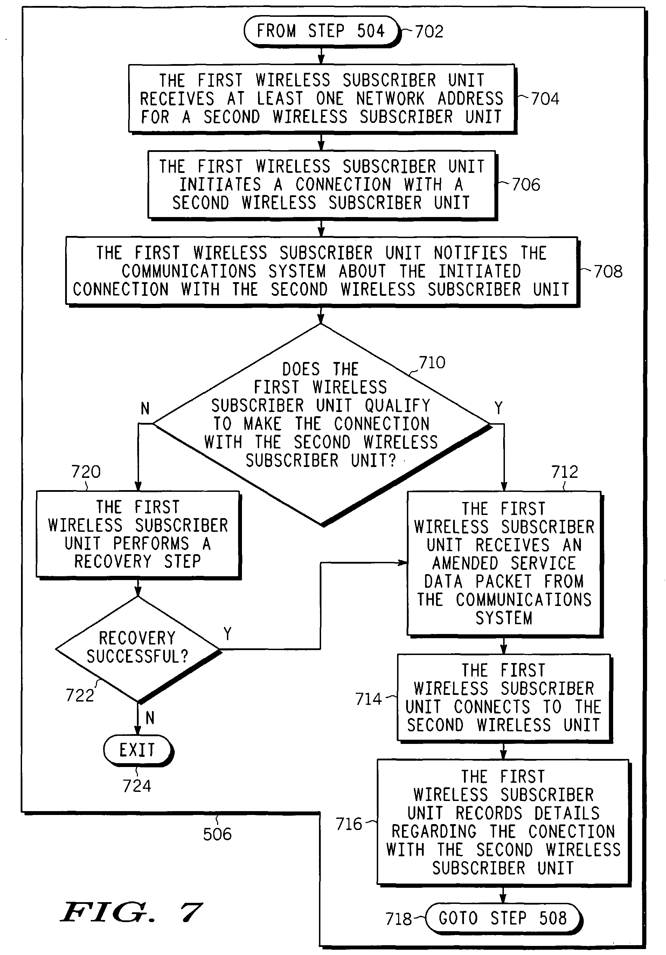

FIG. 7 is an exemplary functional sequence further describing the sequence of step 506 as described by FIG. 5 for the wireless subscriber unit. The functional sequence of FIG. 7 illustrates how a first wireless subscriber unit 304 establishes a connection with a second wireless subscriber unit 306. The functional sequence of FIG. 7 begins with step 702 (which is from step 504 of FIG. 5) and flows directly to step 704.

The first wireless subscriber unit 304, at step 704, receives at least one network address for another wireless subscriber unit, for example, the second wireless subscriber unit 306. The second wireless subscriber unit 306 has also registered with the communications system 312. The network address may be transmitted to the first wireless subscriber unit 304 in the service data packet.

The first wireless subscriber unit 304, at step 706, communicates with the second wireless subscriber unit 306 to initiate a connection. A connection is initiated, for example, by sending a data packet which notifies the second wireless subscriber unit 306 that the first wireless subscriber unit 304 is trying to initiate a connection. The first wireless subscriber unit 304, at step 708, then notifies the communications system 312 about the initiated connection with the second wireless subscriber unit 306. Similarly, the second wireless subscriber unit 306 also notifies the communications system 312 about the initiated connection.

As discussed above, the second wireless subscriber unit 306 has also registered with the communications system 312 and received a service data packet in accordance with the present invention. In one embodiment of the present invention, the first and second wireless subscriber units 304, 306 notify the communications system 312 about the initiated connection by re-transmitting the received service data packet to the communications system 312. The re-transmitted service data packet includes additional data, for example, the additional data may be an identifier which uniquely identifies the transmitting wireless subscriber unit.

Additionally, according to another example of the present invention, the re-transmitted service data packet may further include data which identifies the other wireless subscriber unit that the transmitting wireless subscriber unit is trying establish the connection with. Also, data identifying the services which will be used by the transmitting wireless subscriber unit during the connection may be included in the re-transmitted service data packet.

The communications system 312, at step 710, determines whether the first wireless subscriber unit 304 qualifies to make the connection with the second wireless subscriber unit 306. For example, according to one embodiment of the present invention, the communications system 312 determines whether the second wireless subscriber unit 306 has a network address that was provided to the first wireless subscriber unit 304 in step 704. Additionally, the communications system 312 determines whether the service data packet has expired. As discussed above, the service data packet expires, for example, by the passage of a time interval or by completing a connection with another wireless subscriber unit. If the result of either of these determinations is positive, the sequence flows to step 712. If the result of either of these determinations is negative, the sequence flows to step 720.

The first wireless subscriber unit 304, at step 712, receives an amended service data packet that was transmitted by the communications system 312. In one example of the present invention, the amended service data packet includes additional data that signals the first wireless subscriber unit 304 that the connection to the second wireless subscriber unit 306 can be made. For example, the additional data or the amended service data packet itself can be characterized as a billing token. The communications system 312 records the status of the billing token which can be open or closed. The billing token, for example, is open until a completion data packet for the corresponding connection is sent to the communications system 312 from the corresponding wireless subscriber units.

Once the first wireless subscriber unit 304 receives the amended service data packet, at step 712, the first wireless subscriber unit 304, at step 714, establishes a connection with the second wireless subscriber unit 306. During the connection, the first wireless subscriber unit 304 performs one or more of the services that the original service data packet pre-defined. For example, the first wireless subscriber unit 304 may have performed instant messaging, music download/upload, gaming, group gaming, or the like. The first wireless subscriber unit 304, at step 716, then records details regarding the connection with the second wireless subscriber unit 306. For example, the first wireless subscriber unit 304 may record the service or the services used during the connection, the duration of the services, the wireless subscriber unit the connection was made with, or the like. In one embodiment of the present invention, the recorded details of the connection may be characterized as a Call Detail Record.

One advantage of the present invention is that the details of the multiple services used by the first wireless subscriber unit 304 are collected and recorded in one place. In other words, the recorded details or "billing information" is centralized in the first wireless subscriber unit 304. Having the wireless subscriber unit collect and record the service usage details allows for the efficient and accurate billing of multi-service wireless subscriber units. Additionally, although the multiple service details are collected in one place they may be aggregated in one or more places, for example the communications system 312 or the wireless service provider. The functional sequence, at step 718, then exits.

The first wireless subscriber unit, at step 720, performs a recovery step. The first wireless subscriber unit 304 retries during the specified time T1. If the retry is successful in step 722, the process continues to step 712. On the other hand, once the specified time T1 passes, the first wireless subscriber unit 304 reports the failure to the server 312 via connection and exits in step 724. In another embodiment, the first subscriber unit 304 may tries to reregister with the server 312 to determine the address of the second wireless subscriber unit 306 and try again for a predetermined number of attempts before exiting in step 724.

### Details of Step 508

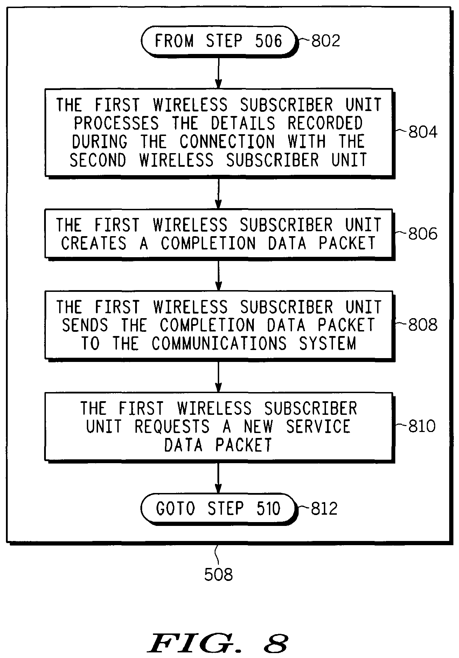

FIG. 8 is an exemplary functional sequence further describing the sequence of step 508 as described by FIG. 5. The functional sequence of FIG. 8 illustrates the sequence of how the first wireless subscriber unit 304 reports back to the communications system 312 with used services information from a connection with the second wireless subscriber unit 306. The functional sequence of FIG. 8 begins with step 802 and flows directly to step 804.

After a connection between the first wireless subscriber unit 304 and the second wireless subscriber unit 306 has been completed, the first wireless subscriber unit 304, at step 804, processes the details recorded during the connection with the second wireless subscriber unit 306. The first wireless subscriber unit 304, at step 806, then creates a completion data packet. The completion data packet includes information to identify the first wireless subscriber unit 304, the recorded call details or Call Detail Record, and the like. The completion data packet may also be characterized as a completion token.

The first wireless subscriber unit 304, at step 808, transmits the completion data packet to the communications system 312. In one embodiment of the present invention, the communications system 312 requires a wireless subscriber unit to transmit a completion packet for each service data packet/active token that expired from completing a connection with another wireless subscriber unit. If the wireless subscriber unit fails to send the completion packet for a particular connection, the communications system 312 deactivates that wireless subscriber unit from the communications system 312. For example, if the first wireless subscriber unit 304 failed to transmit the completion data package for the connection with the second wireless subscriber unit 306, the communications system 312 deactivates the first wireless subscriber unit 304 by inhibiting the transmission of another service data packet/active token to the first wireless subscriber unit 304. Therefore, the first wireless subscriber unit 306 is prevented from establishing a new connection.

However, the first wireless subscriber unit 304 can receive a new service data packet/active token if a recovery step is performed. For example, the first wireless subscriber unit 304 may transmit the particular completion data packet/completion token required by the communications system 312 or may have to re-register with the communications system 312.

The communications system 312 processes the completion data packet/completion token and updates the billing token status to closed. The communications system 312 also receives a completion data packet/completion token from the second wireless subscriber unit 306. Once both completion data packets/completion tokens are received, the communications system 312 determines whether the call detail records associated with the first and second wireless subscriber units 304, 306 correspond to each other within a given correspondence threshold. For example, the communications system 312 processes each call detail record to ensure that each call detail record reflects the same services, duration of services, correct identity of wireless subscriber units, or the like. The correspondence threshold, for example, can be a predefined value determined by the wireless service provider.

If the call detail records correspond to each other within the given correspondence threshold and the corresponding billing tokens are closed, the communications system 312 creates billing information for each of the wireless subscriber units. The billing information can be compiled into any format as required by the wireless service provider. The communications system 312 then transmits the billing information to the wireless service provider. If the call detail records fail to correspond to the given correspondence threshold, the communications system 312 notes each inconsistency and transmits the billing information with the noted inconsistencies to the wireless service provider.

After transmitting the completion data packet to the communications system 312, the first wireless subscriber unit 304, at step 810, requests a new service data packet/active token from the communications system 312. The first wireless subscriber unit 304, for example, makes the request by sending a service data request packet. The service data request packet signals the communications system 304 to send a new service data packet to the first wireless subscriber 304 unit so that it may establish a new connection. However, in one example of the present invention, if the first wireless subscriber unit 304 fails to request a new service data packet within a predefined interval of time has passed after the current service data packet expires, the communications system 312 requires the first wireless subscriber unit 304 to re-register with the communications system 312. The first wireless subscriber unit 304 then performs the steps as discussed in FIG. 7.

Additionally, according to another example of the present invention, the first wireless device 304 receives information in the service data packet that allows the first wireless subscriber unit 304 to connect to a PSTN 320 or use cellular services through a proxy server 322. The first wireless subscriber unit 304 notifies the communications system 312 about an initiated connection through the PSTN 322 or a proxy server 320. The process continues to function as described above with reference to FIGs. 5, 6, 7, and 8.

### Overall Functional Sequence Between Two Wireless Subscriber Units and IPS

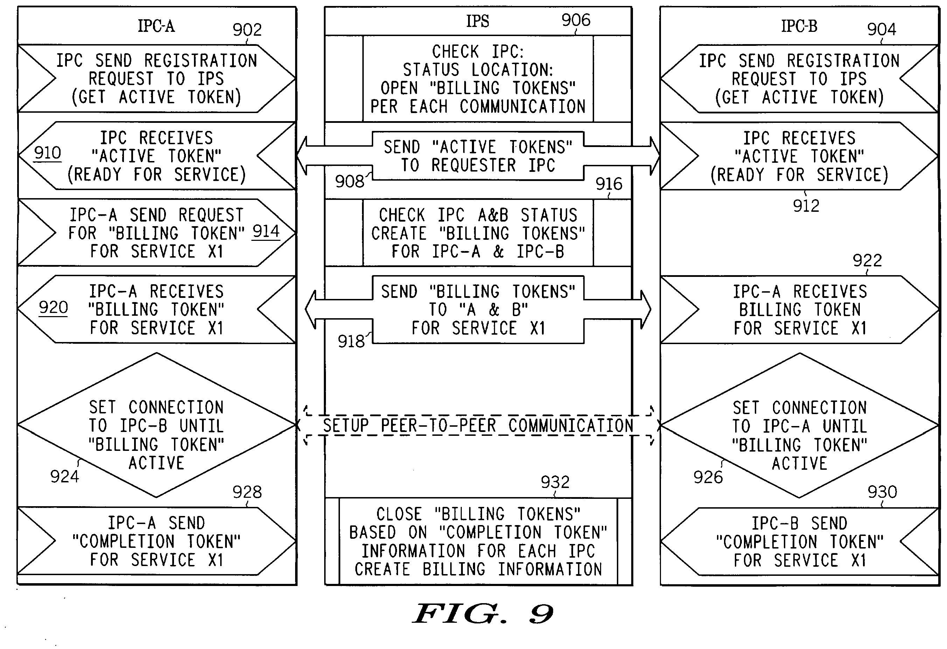

FIG. 9 illustrates a more detailed example of a functional sequence for the overall process of the present invention. The functional sequence of FIG. 9 illustrates an example of the processes as described in FIGs. 5, 6, 7, and 8.

An Internet Protocol Client A, at step 902, sends a registration request to an IPS. An internet protocol ("IP") client, for example, is a type of wireless subscriber unit 304, 306, 308, 310, 316, 318 that is capable of IP based communications. As discussed above with reference to FIG. 5, the IPS is an exemplary communications system 312. An IP Client B, at step 904, also sends a registration request to the IPS. The IPS, at step 906, checks whether the IP Clients A and B qualify for registration. For example, the IPS may perform step 604 as discussed above with reference to FIG. 6. The IPS, for example, may determine if the IP Clients A and B have registered previously, or if the IP Clients A and B are operating in a prohibited area. The IPS may also determine whether the IP Clients have an open billing token from a previous connection with another wireless subscriber unit 304, 306, 308, 310, 316,318.

After the IPS determines that the IP Clients A and B qualify for registration, the IPS, at step 908, sends an active token to IP Client A and IP Client B. The active token, as discussed above with reference to FIG. 5, is a service data packet which enables the IP Client to perform a service during a connection with another wireless subscriber unit 304, 306, 308, 310, 316, 318. The IP Client A, at step 910, receives the active token and, for example, is ready to initiate a connection with the IP Client B. Similarly, IP Client B, at step 912, also receives an active token from the IPS.

The IP Client A, at step, 914, then sends a request to the IPS for a billing token. As discussed above with reference to FIG. 7, the request for the billing token, for example, is made by re-transmitting the received service data packet which includes additional data identifying the service or services that will be used during a connection with the IP Client B. Additionally, the IP Client B may also request a billing token similarly identifying the services to be used during a connection with IP Client A. The IPS, at step 918, determines whether IP Client A and IP Client B qualify for a billing token. For example, the IPS may determine whether the IP Clients A and B are still registered with the IPS. The IPS may also determine whether the IP Clients A and B have permission to use the identified services.

Once the IPS determines that the IP Client A qualifies for the billing token, the IPS, at step 918, sends a billing token to each IP Client. The IP Client A, at step 920, receives the billing token. Similarly, the IP Client B, at step 922, also receives the billing token.

The IP Client A, at step 924, sets a connection to the IP Client B and the IP Client B, at step 926, sets a connection to IP Client A. Once the connection is set by each of the IP Clients, peer-to-peer communication can begin between the IP Client A and the IP Client B. After the connection has completed, the IP Client A, at step 928, sends a completion token for the service or services used during the connection. As discussed above with reference to FIG. 8, the completion token is a completion data packet which includes a call detail record for the connection. The IP Client B, at step 930, similarly sends a completion token for the connection to the IPS. The IPS, at step 932, closes the billing tokens for each IP Client according to the information in the completion token. The IPS then creates the corresponding billing information to be transmitted to the wireless service provider.

### Service Status Table

FIG. 10 shows an exemplary service status table 1002 according to an embodiment of the present invention. The service status table 1002 may reside for example, in the storage module 406 of the first wireless subscriber unit 304. Alternatively, in another example, the service status table may reside on the communications system 312. The first wireless subscriber unit 304 parses the service status table 1002, for example, when the first wireless subscriber unit 304 registers with the communications system 312 or is deactivated from the communications system 312.

The service status table 1002 comprises a type of service field 1004, a status of service field 1006, and a prompt level field 1008. However, the service status table 1002 is not limited to these fields. The type of service field 1004 comprises entries for various types of services, for example, a text message entry 1010 and a gaming entry 1012. In one example, the entries for each type of service are for services that were being performed during a connection when a connection interruption occurred. In another example, the entries for each type of service are for all of the services performed during a connection.

The status of service field 1006 identifies whether the associated service is closed or open. For example, the status of service entry 1014 identifies that the status of the text messaging service in entry 1010 is closed. In one example, a service is identified as closed when the service has been completed. For example, after a text message has been sent or a video conference has completed, the status of these services is identified as closed. On the other hand, if the service has failed to be completed, the status of the service will be identified as open. For example, if a connection interruption occurs during a voice call or a gaming session, the status of the service is identified as open.

As discussed above, a service data packet\active token expires after a connection interruption. A new service data packet\active token will only be sent to the first wireless subscriber unit 304 if the completion data packet\active token from the previous connection is received by the communications system 312. However, if the status of a service that was performed during a connection is open, the completion data package for that connection is not created. Therefore, one advantage of the service status table 1002 is that connection interruptions can be recorded and the open services identified so that the services may be closed.

The prompt level field 1008 includes entries identifying the prompt level for the associated services. In one embodiment, the prompt level determines whether the service is automatically completed or if the user is prompted to manually complete the service. For example, the prompt level entry 1016 identifies that that prompt level for the text message service 1010 is automatic. Therefore, if the status of the text message service is open, the first wireless subscriber unit 304 automatically restarts the text message service so that it may be completed. On the other hand, the prompt level entry 1018 identifies that the prompt level for a gaming service 1012 is manual. Therefore, the first wireless subscriber unit 304 prompts the user to either finish the game or end the game so that the service is completed. Once all of the services for a connection are closed, the first wireless subscriber unit 304 can create the completion data packet for that connection. Also, the prompt levels for the services may be defined by the user, network administrator, wireless service provider, or the like.

Additionally, because the wireless subscriber units record the service details locally and keep track of interruptions by way of the service status table 1002, each party of an interrupted connection can verify the other party's recorded information. For example, if an interruption occurs between the first wireless subscriber unit 304 and the second wireless subscriber unit 306, each wireless subscriber unit 304, 306 may cross reference each other service status table and recorded details about the services performed during the interrupted connection. This verification capability further ensures efficient and accurate billing for completed and interrupted services.

### Computer Program Product

The present invention can also be embedded in a computer program product, which comprises all the features enabling the implementation of the methods described herein, and which - when loaded in a computer system - is able to carry out these methods. Computer program means or computer program in the present context mean any expression, in any language, code or notation, of a set of instructions intended to cause a system having an information processing capability to perform a particular function either directly or after either or both of the following a) conversion to another language, code or, notation; and b) reproduction in a different material form.

Each computer system may include, inter alia, one or more computers and at least a computer readable medium allowing a computer to read data, instructions, messages or message packets, and other computer readable information from the computer readable medium. The computer readable medium may include non-volatile memory, such as ROM, Flash memory, Disk drive memory, CD-ROM, and other permanent storage. Additionally, a computer medium may include, for example, volatile storage such as RAM, buffers, cache memory, and network circuits. Furthermore, the computer readable medium may comprise computer readable information in a transitory state medium such as a network link and/or a network interface, including a wired network or a wireless network that allow a computer to read such computer readable information.

### Non-Limiting Examples

Although specific embodiments of the invention have been disclosed, those having ordinary skill in the art will understand that changes can be made to the specific embodiments without departing from the scope of the invention as it is depicted in the appended claims.

## Claims

1. A method for locally capturing billing services information for at least one service on a first wireless subscriber unit, the method comprising:
sending a registration data packet to a communications system for authorizing a use of at least one service with a first wireless subscriber unit, the registration data packet including data that identifies the first wireless subscriber unit to the communications system;
responsive to sending the registration data packet, receiving a service data packet from the communications system that provides at least one network address for at least a second wireless subscriber unit which is also registered with the communication system and which has also received a service data packet, wherein the service data packet further includes:
service information for allowing a single connection between the first wireless subscriber unit and the at least second wireless subscriber unit, the service data packet expiring after the first wireless subscriber unit and the at least second wireless subscriber complete a connection between each other, requiring the first wireless subscriber unit to receive a new service data packet before the communications system allows a new connection by the first wireless subscriber unit;
connecting to the at least second wireless subscriber unit and performing at least one service defined by the service data packet; and
thereafter, creating a completion data packet including at least information to identify the first wireless subscriber unit and a call detail record of the at least one service.

2. The method as defined in claim 1, further comprising the steps of:
connecting to the at least second wireless subscriber unit according to service data included in the received service data packet, wherein the call detail record includes at least recorded information corresponding to the at least one service used by the first wireless subscriber unit during the connection between the first wireless subscriber unit and the second wireless subscriber unit.

3. The method as defined in claim 1, wherein the service information resides on the first wireless subscriber unit.

4. The method as defined in claim 1, further comprising the steps of:
sending the completion data packet to the communications system.

5. The method as defined in claim 1, further comprising the steps of:
creating a service status table including at least one service performed during a connection with at least a second wireless subscriber unit.

6. A wireless subscriber unit for locally capturing billing services information for at least one service locally on the wireless subscriber unit, the wireless subscriber unit comprising:
a transmitter configured to send a registration data packet to a communications system for authorizing use of at least one service, the registration data packet including data that identifies a first wireless subscriber unit to the communications system;
a receiver configured to, responsive to sending the registration data packet, receiving a service data packet from the communications system that provides at least one network address for at least a second wireless subscriber unit which is also registered with the communication system and which has also received a service data packet, wherein the service data packet further includes:
service information for allowing a single connection between the first wireless subscriber unit and the at least second wireless subscriber unit, the service data packet expiring after the first wireless subscriber unit and the at least second wireless subscriber complete a connection between each other, requiring the first wireless subscriber unit to receive a new service data packet before the communications system allows a new connection by the first wireless subscriber unit; and
a device controller configured to :
connect to the at least second wireless subscriber unit and to perform at least one service defined by the service data packet, and,
thereafter, to create a completion data packet including at least information to identify the first wireless subscriber unit and a call detail record of the at least one service.

7. The wireless subscriber unit as defined in claim 6, wherein the service data packet further includes:
service information for allowing a single connection between the first wireless subscriber unit and the at least second wireless subscriber unit.

8. The wireless subscriber unit as defined in claim 7, wherein the service information resides on the first wireless subscriber unit.

9. The wireless subscriber unit as defined in claim 6, wherein the call detail record includes:
at least recorded information corresponding to the at least one service used by the first wireless subscriber unit during a connection between the first wireless subscriber unit and the second wireless subscriber unit.

10. A computer program product being embodied in a non-transitory computer readable storage medium and comprising computer executable instructions which when executed by a computer cause the computer to locally capture billing services information for at least one service locally on a first wireless subscriber unit, the computer instructions comprising instructions for:
sending a registration data packet to a communications system for authorizing a use of at least one service with a first wireless subscriber unit, the registration data packet including data that identifies the first wireless subscriber unit to the communications system;
responsive to sending the registration data packet, receiving a service data packet from the communications system that provides at least one network address for at least a second wireless subscriber unit which is also registered with the communication system and which has also received a service data packet, wherein the service data packet further includes:
service information for allowing a single connection between the first wireless subscriber unit and the at least second wireless subscriber unit, the service data packet expiring after the first wireless subscriber unit and the at least second wireless subscriber complete a connection between each other, requiring the first wireless subscriber unit to receive a new service data packet before the communications system allows a new connection by the first wireless subscriber unit; and
connecting to the at least second wireless subscriber unit and performing at least one service defined by the service data packet; and
thereafter creating a completion data packet including at least information to identify the first wireless subscriber unit and a call detail record of the service.

## Patentansprüche

1. Verfahren zum lokalen Erfassen von Abrechnungsdienst-Informationen für zumindest einen Dienst auf einer ersten drahtlosen Teilnehmereinheit, das Verfahren umfassend:
Senden eines Registrierungsdatenpakets an ein Kommunikationssystem zur Autorisierung einer Nutzung von zumindest einem Dienst mit einer ersten drahtlosen Teilnehmereinheit, wobei das Registrierungsdatenpaket Daten beinhaltet, die die erste drahtlose Teilnehmereinheit gegenüber dem Kommunikationssystem identifizieren;
in Reaktion auf das Senden des Registrierungsdatenpakets, Empfangen eines Dienstdatenpakets von dem Kommunikationssystem, das zumindest eine Netzadresse für zumindest eine zweite drahtlose Teilnehmereinheit bereitstellt, die ebenfalls bei dem Kommunikationssystem registriert ist und die ebenfalls ein Dienstdatenpaket empfangen hat, wobei das Dienstdatenpaket ferner beinhaltet:
Dienstinformationen zur Ermöglichung einer einzelnen Verbindung zwischen der ersten drahtlosen Teilnehmereinheit und der zumindest zweiten drahtlosen Teilnehmereinheit, wobei das Dienstdatenpaket abläuft, nachdem die erste drahtlose Teilnehmereinheit und der zumindest zweite drahtlose Teilnehmer eine Verbindung untereinander abgeschlossen haben, sodass die erste drahtlose Teilnehmereinheit ein neues Dienstdatenpaket empfangen muss, bevor das Kommunikationssystem eine neue Verbindung durch die erste drahtlose Teilnehmereinheit zulässt;
Herstellen einer Verbindung zu der zumindest zweiten drahtlosen Teilnehmereinheit und Ausführen zumindest eines durch das Dienstdatenpaket definierten Dienstes; und
danach Erstellen eines Abschlussdatenpakets, das zumindest Informationen zur Identifizierung der ersten drahtlosen Teilnehmereinheit und eines Anrufdetail-Datensatzes des zumindest einen Dienstes beinhaltet.

2. Verfahren nach Anspruch 1, ferner umfassend die folgenden Schritte:
Herstellen einer Verbindung mit der zumindest zweiten drahtlosen Teilnehmereinheit gemäß den Dienstdaten, die in dem empfangenen Dienstdatenpaket beinhaltet sind, wobei der Anrufdetail-Datensatz zumindest aufgezeichnete Informationen beinhaltet, die dem zumindest einen Dienst entsprechen, der von der ersten drahtlosen Teilnehmereinheit während der Verbindung zwischen der ersten drahtlosen Teilnehmereinheit und der zweiten drahtlosen Teilnehmereinheit verwendet wird.

3. Verfahren nach Anspruch 1, wobei sich die Dienstinformationen auf der ersten drahtlosen Teilnehmereinheit befinden.

4. Verfahren nach Anspruch 1, ferner die folgenden Schritte umfassend:
Senden des Abschlussdatenpakets an das Kommunikationssystem.

5. Verfahren nach Anspruch 1, ferner die folgenden Schritte umfassend:
Erstellen einer Dienststatustabelle, die zumindest einen Dienst beinhaltet, der während einer Verbindung mit zumindest einer zweiten drahtlosen Teilnehmereinheit ausgeführt wird.

6. Drahtlose Teilnehmereinheit zum lokalen Erfassen von Abrechnungsdienst-Informationen für zumindest einen Dienst lokal auf der drahtlosen Teilnehmereinheit, die drahtlose Teilnehmereinheit umfassend:
einen Sender, der so konfiguriert ist, dass er ein Registrierungsdatenpaket an ein Kommunikationssystem sendet, um die Nutzung von zumindest einem Dienst zu autorisieren, wobei das Registrierungsdatenpaket Daten beinhaltet, die eine erste drahtlose Teilnehmereinheit für das Kommunikationssystem identifizieren;
einen Empfänger, der so konfiguriert ist, dass er in Reaktion auf das Senden des Registrierungsdatenpakets ein Dienstdatenpaket von dem Kommunikationssystem empfängt, das zumindest eine Netzadresse für zumindest eine zweite drahtlose Teilnehmereinheit bereitstellt, die ebenfalls bei dem Kommunikationssystem registriert ist und die ebenfalls ein Dienstdatenpaket empfangen hat, wobei das Dienstdatenpaket ferner beinhaltet:
Dienstinformationen zur Ermöglichung einer einzelnen Verbindung zwischen der ersten drahtlosen Teilnehmereinheit und der zumindest zweiten drahtlosen Teilnehmereinheit, wobei das Dienstdatenpaket abläuft, nachdem die erste drahtlose Teilnehmereinheit und der zumindest zweite drahtlose Teilnehmer eine Verbindung untereinander abgeschlossen haben, sodass die erste drahtlose Teilnehmereinheit ein neues Dienstdatenpaket empfangen muss, bevor das Kommunikationssystem eine neue Verbindung durch die erste drahtlose Teilnehmereinheit zulässt; und
einen Geräte-Controller, der konfiguriert ist zum:
Herstellen einer Verbindung zu der zumindest zweiten drahtlosen Teilnehmereinheit und Ausführen zumindest eines Dienstes, der durch das Dienstdatenpaket definiert ist, und danach Erzeugen eines Abschlussdatenpakets, das zumindest Informationen zur Identifizierung der ersten drahtlosen Teilnehmereinheit und einen Anrufdetail-Datensatz des zumindest einen Dienstes beinhaltet.

7. Drahtlose Teilnehmereinheit nach Anspruch 6, wobei das Dienstdatenpaket ferner beinhaltet:
Dienstinformationen, um eine einzige Verbindung zwischen der ersten drahtlosen Teilnehmereinheit und der zumindest zweiten drahtlosen Teilnehmereinheit zu ermöglichen.

8. Drahtlose Teilnehmereinheit nach Anspruch 7, wobei sich die Dienstinformationen auf der ersten drahtlosen Teilnehmereinheit befinden.

9. Drahtlose Teilnehmereinheit nach Anspruch 6, wobei der Anrufdetail-Datensatz beinhaltet:
zumindest aufgezeichnete Informationen, die dem zumindest einen Dienst entsprechen, der von der ersten drahtlosen Teilnehmereinheit während einer Verbindung zwischen der ersten drahtlosen Teilnehmereinheit und der zweiten drahtlosen Teilnehmereinheit verwendet wird.

10. Computerprogrammprodukt, das in einem nichtflüchtigen computerlesbaren Speichermedium enthalten ist und computerausführbare Anweisungen umfasst, die, wenn sie von einem Computer ausgeführt werden, den Computer veranlassen, lokal Abrechnungsdienst-Informationen für zumindest einen Dienst lokal auf einer ersten drahtlosen Teilnehmereinheit zu erfassen, wobei die Computeranweisungen Anweisungen umfassen zum:
Senden eines Registrierungsdatenpakets an ein Kommunikationssystem zur Autorisierung einer Nutzung von zumindest einem Dienst mit einer ersten drahtlosen Teilnehmereinheit, wobei das Registrierungsdatenpaket Daten beinhaltet, die die erste drahtlose Teilnehmereinheit gegenüber dem Kommunikationssystem identifizieren;
in Reaktion auf das Senden des Registrierungsdatenpakets, Empfangen eines Dienstdatenpakets von dem Kommunikationssystem, das zumindest eine Netzadresse für zumindest eine zweite drahtlose Teilnehmereinheit bereitstellt, die ebenfalls bei dem Kommunikationssystem registriert ist und die ebenfalls ein Dienstdatenpaket empfangen hat, wobei das Dienstdatenpaket ferner beinhaltet:
Dienstinformationen zur Ermöglichung einer einzelnen Verbindung zwischen der ersten drahtlosen Teilnehmereinheit und der zumindest zweiten drahtlosen Teilnehmereinheit, wobei das Dienstdatenpaket abläuft, nachdem die erste drahtlose Teilnehmereinheit und der zumindest zweite drahtlose Teilnehmer eine Verbindung untereinander abgeschlossen haben, sodass die erste drahtlose Teilnehmereinheit ein neues Dienstdatenpaket empfangen muss, bevor das Kommunikationssystem eine neue Verbindung durch die erste drahtlose Teilnehmereinheit zulässt; und
Herstellen einer Verbindung zu der zumindest zweiten drahtlosen Teilnehmereinheit und Ausführen zumindest eines Dienstes, der durch das Dienstdatenpaket definiert ist; und
danach Erstellen eines Abschlussdatenpakets, das zumindest Informationen zur Identifizierung der ersten drahtlosen Teilnehmereinheit und eines Anrufdetail-Datensatzes des Dienstes beinhaltet.

## Revendications

1. Procédé de capture locale d'informations de services de facturation pour au moins un service sur une première unité d'abonné sans fil, le procédé comprenant :
l'envoi d'un paquet de données d'inscription à un système de communications pour l'autorisation d'une utilisation d'au moins un service avec une première unité d'abonné sans fil, le paquet de données d'inscription incluant des données qui identifient la première unité d'abonné sans fil au système de communications ;
en réponse à l'envoi du paquet de données d'inscription, la réception d'un paquet de données de service depuis le système de communications qui fournit au moins une adresse réseau pour au moins une deuxième unité d'abonné sans fil qui est également inscrite avec le système de communication et qui a également reçu un paquet de données de service, dans lequel le paquet de données de service inclut en outre :
des informations de service pour permettre une connexion unique entre la première unité d'abonné sans fil et l'au moins deuxième unité d'abonné sans fil, le paquet de données de service arrivant à expiration après que la première unité d'abonné sans fil et l'au moins deuxième unité d'abonné sans fil achèvent une connexion entre elles, nécessitant que la première unité d'abonné sans fil reçoive un nouveau paquet de données de service avant que le système de communications autorise une nouvelle connexion par la première unité d'abonné sans fil ;
la connexion à l'au moins deuxième unité d'abonné sans fil et la réalisation d'au moins un service défini par le paquet de données de service ; et
puis, la création d'un paquet de données d'achèvement incluant au moins des informations pour identifier la première unité d'abonné sans fil et un enregistrement détaillé d'appels de l'au moins un service.

2. Procédé selon la revendication 1, comprenant en outre les étapes consistant à :
se connecter à l'au moins deuxième unité d'abonné sans fil selon des données de service incluses dans le paquet de données de service reçu, dans lequel l'enregistrement détaillé d'appels inclut au moins des informations enregistrées correspondant à l'au moins un service utilisé par la première unité d'abonné sans fil pendant la connexion entre la première unité d'abonné sans fil et la deuxième unité d'abonné sans fil.

3. Procédé selon la revendication 1, dans lequel les informations de service résident sur la première unité d'abonné sans fil.

4. Procédé selon la revendication 1, comprenant en outre les étapes consistant à :
envoyer le paquet de données d'achèvement au système de communication.

5. Procédé selon la revendication 1, comprenant en outre les étapes consistant à :
créer un tableau d'état de service incluant au moins un service réalisé pendant une connexion avec au moins une deuxième unité d'abonné sans fil.

6. Unité d'abonné sans fil pour la capture locale d'informations de services de facturation pour au moins un service localement sur l'unité d'abonné sans fil, l'unité d'abonné sans fil comprenant :
un émetteur configuré pour envoyer un paquet de données d'inscription à un système de communications pour autoriser l'utilisation d'au moins un service, le paquet de données d'inscription incluant des données qui identifient une première unité d'abonné sans fil au système de communication ;
un émetteur configuré pour recevoir, en réponse à l'envoi du paquet de données d'inscription, un paquet de données de service depuis le système de communications qui fournit au moins une adresse réseau pour au moins une deuxième unité d'abonné sans fil qui est également inscrite avec le système de communication et qui a également reçu un paquet de données de service, dans lequel le paquet de données de service inclut en outre :
des informations de service pour permettre une connexion unique entre la première unité d'abonné sans fil et l'au moins deuxième unité d'abonné sans fil, le paquet de données de service arrivant à expiration après que la première unité d'abonné sans fil et l'au moins deuxième unité d'abonné sans fil achèvent une connexion entre elles, nécessitant que la première unité d'abonné sans fil reçoive un nouveau paquet de données de service avant que le système de communications autorise une nouvelle connexion par la première unité d'abonné sans fil ; et
un dispositif de commande de dispositif configuré pour :
se connecter à l'au moins deuxième unité d'abonné sans fil et réaliser au moins un service défini par le paquet de données de service, puis, par la suite, créer un paquet de données d'achèvement incluant au moins des informations pour identifier la première unité d'abonné sans fil et un enregistrement détaillé d'appels de l'au moins un service.

7. Unité d'abonné sans fil selon la revendication 6, dans laquelle le paquet de données de service inclut en outre :
des informations de service pour permettre une connexion unique entre la première unité d'abonné sans fil et l'au moins deuxième unité d'abonné sans fil.

8. Unité d'abonné sans fil selon la revendication 7, dans laquelle les informations de service résident sur la première unité d'abonné sans fil.

9. Unité d'abonné sans fil selon la revendication 6, dans laquelle l'enregistrement détaillé d'appels inclut :
au moins des informations enregistrées correspondant à l'au moins un service utilisé par la première unité d'abonné sans fil pendant une connexion entre la première unité d'abonné sans fil et la deuxième unité d'abonné sans fil.

10. Produit de programme informatique incorporé dans un support de stockage lisible par ordinateur non transitoire et comprenant des instructions exécutables par ordinateur qui, lorsqu'elles sont exécutées par un ordinateur, amènent l'ordinateur à capturer localement des informations de services de facturation pour au moins un service localement sur une première unité d'abonné sans fil, les instructions informatiques comprenant des instructions pour :
l'envoi d'un paquet de données d'inscription à un système de communications pour l'autorisation d'une utilisation d'au moins un service avec une première unité d'abonné sans fil, le paquet de données d'inscription incluant des données qui identifient la première unité d'abonné sans fil au système de communications ;
en réponse à l'envoi du paquet de données d'inscription, la réception d'un paquet de données de service depuis le système de communications qui fournit au moins une adresse réseau pour au moins une deuxième unité d'abonné sans fil qui est également inscrite avec le système de communication et qui a également reçu un paquet de données de service, dans lequel le paquet de données de service inclut en outre :
des informations de service pour permettre une connexion unique entre la première unité d'abonné sans fil et l'au moins deuxième unité d'abonné sans fil, le paquet de données de service arrivant à expiration après que la première unité d'abonné sans fil et l'au moins deuxième unité d'abonné sans fil achèvent une connexion entre elles, nécessitant que la première unité d'abonné sans fil reçoive un nouveau paquet de données de service avant que le système de communications autorise une nouvelle connexion par la première unité d'abonné sans fil ; et
la connexion à l'au moins deuxième unité d'abonné sans fil et la réalisation d'au moins un service défini par le paquet de données de service ; et
puis la création d'un paquet de données d'achèvement incluant au moins des informations pour identifier la première unité d'abonné sans fil et un enregistrement détaillé d'appels du service.
